# EUROPEAN PATENT SPECIFICATION

(11) **EP 1 172 241 B1**
(45) Date of publication and mention of the grant of the patent: **06.05.2004**
(21) Application number: 01305730.2
(22) Date of filing: 02.07.2001
(51) Int. Cl.: B60H 1/00, F04D 29/44

(54) **Vehicle air conditioner**
Fahrzeugklimaanlage
Dispositif de climatisation d'un véhicule

(30) Priority: 14.07.2000 JP 2000214093
(43) Date of publication of application: 16.01.2002
(73) Proprietor: SANDEN CORPORATION, Isesaki-shi Gunma 372 (JP)
(72) Inventor: Fujisawa, Ken, c/o Sanden Corporation, Isesaki-shi, Gunma 372 (JP)
(74) Representative: Haley, Stephen

(56) References cited:
- EP-A- 0 325 481
- FR-A- 2 781 531
- US-B1- 6 168 378

## Description

This invention relates to a vehicle air conditioner and, in particular, to a vehicle air conditioner adapted for use as an automobile air conditioner.

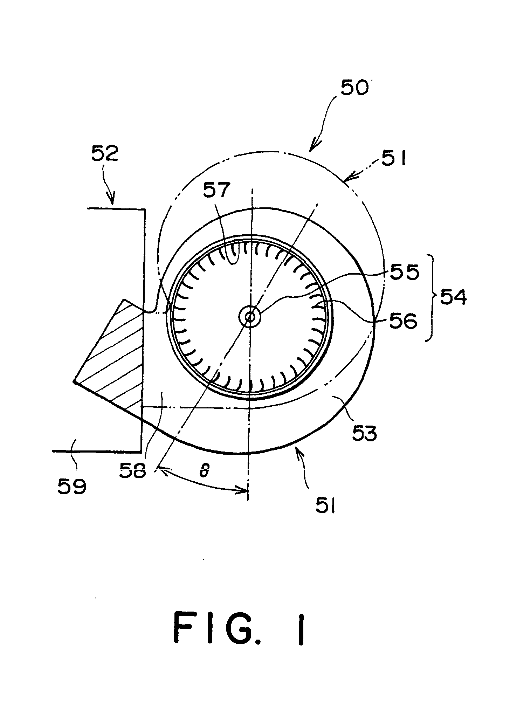

Referring to Fig. 1, description will be made of a conventional vehicle air conditioner. The vehicle air conditioner depicted by a reference numeral 50 comprises a scroll 51 and a heat exchanger unit 52. The scroll 51 defines an airflow path or channel 53 of an involute shape known in the art. The airflow path 53 is provided with a centrifugal multi-blade fan 54 arranged at a center portion thereof. The centrifugal multi-blade fan 54 comprises a rotation shaft 55 and a number of blades 56 arranged around the rotation shaft 55. The scroll 51 has an air suction port 57 and an air discharge port 58 at the start and the end of the airflow path 53.

When the fan 54 is driven, air is sucked through the air suction port 57 into the interior of the scroll 51. The air thus sucked is blown and delivered outwards in a radial direction of the fan 54. Thereafter, the air is sufficiently increased in pressure in the airflow path 53 and then discharged through the air discharge port 58 into the heat exchanger unit 52.

In the vehicle air conditioner 50 illustrated in Fig. 1, the scroll 51 originally located at a position depicted by a two-dot-and-dash line in the figure may be moved by an angle θ to be located at a position depicted by a solid line in order to reduce the size of the air conditioner 50 as a whole. In this event, although the size of the air conditioner 50 as a whole can be reduced, the airflow path 53 is inevitably shortened by a portion corresponding to a hatched area in Fig. 1. As a consequence, the air may flow into the heat exchanger unit 52 without being sufficiently increased in pressure. Furthermore, a cross-sectional rea of an air inlet portion 59 of the heat exchanger unit 52 is generally greater than an opening of the air discharge port 58 of the scroll 51. Therefore, the air tends to be decreased in pressure particularly when the air flows into the heat exchanger unit 52.

In case where the vehicle air conditioner 50 is reduced in size in the above-mentioned manner, the degree of freedom in design is considerably decreased.

FR-A-2781531 and EP-A-0325481 both disclose vehicle air conditioners with scrolls and heat exchanger units in which one or more diffusers are employed.

It is an object of this invention to provide a vehicle air conditioner which is capable of preventing the decrease in blowing performance, achieving the reduction in size, and increasing the degree of freedom in design.

Other objects of the present invention will become clear as the description proceeds.

According to the present invention, there is provided a vehicle air conditioner comprising a scroll defining an airflow path which extends around a predetermined axis for guiding air and having an air discharge port or discharging said air from said airflow path towards a first direction and a heat exchanger unit having an air inlet portion communicating with said air discharge port, said air inlet portion being greater in cross-sectional area than said air discharge port, a diffuser buried in at least a part of said air inlet portion, characterised by said diffuser having a size being equal to a half or less as compared with the size of said air discharge port in a second direction perpendicular to said first direction and said axis.

In the Drawings;
Fig. 1 is a schematic view showing a characteristic part of a conventional vehicle air conditioner.
Fig. 2 is a schematic view of a vehicle air conditioner according to one embodiment of this invention;
Fig. 3 is a sectional view taken along a line III-III in Fig. 2;
Fig. 4 is a sectional view similar to Fig. 3 but showing a vehicle air conditioner according to another embodiment of this invention;
Fig. 5 is a perspective view of a part of a heat exchanger unit in the vehicle air conditioner illustrated in Fig. 4; and
Fig. 6 is a graph showing blowing characteristics of the conventional vehicle air conditioner in Fig. 1 and the vehicle air conditioner illustrated in Figs. 2 and 3 in comparison.

Now, description will be made of preferred embodiments of this invention with reference to the drawings.

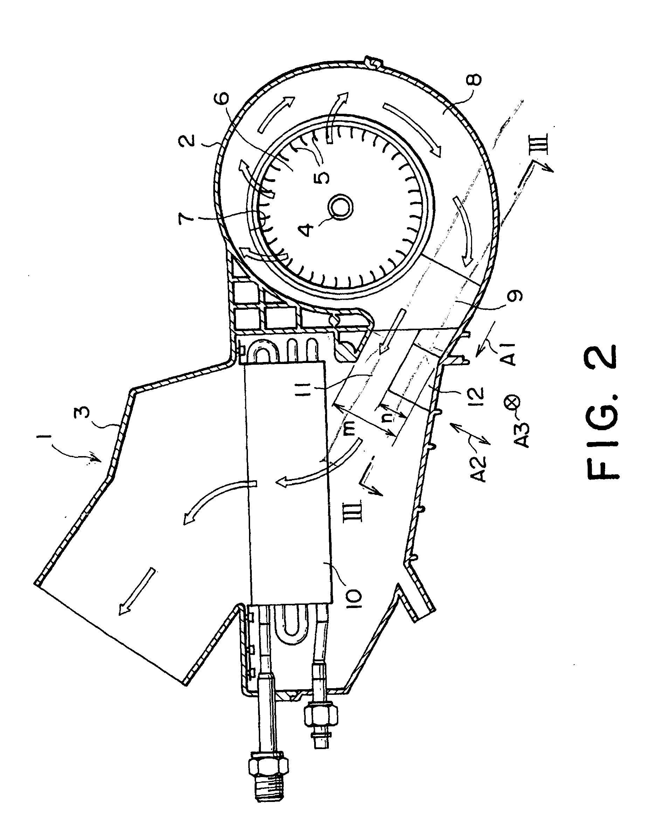

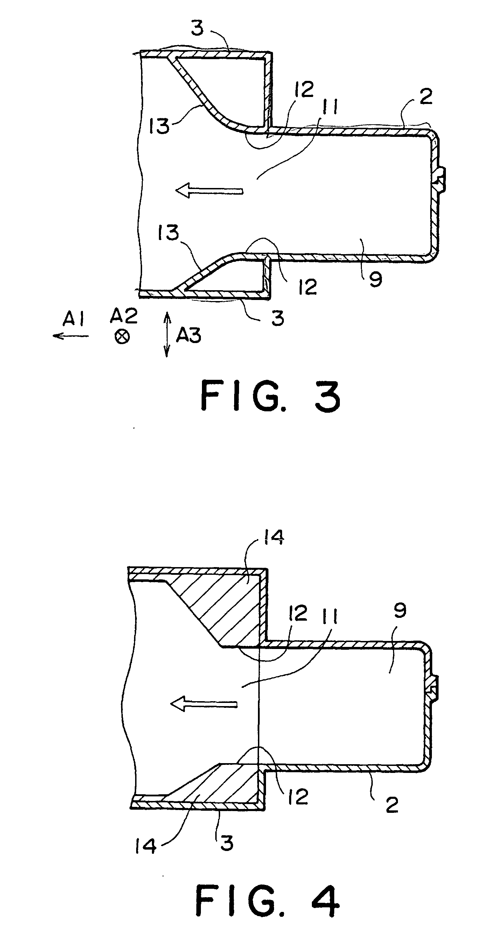

Referring to Figs. 2 and 3, a vehicle air conditioner according to one embodiment of this invention is depicted by a reference numeral 1 and comprises a scroll 2 and a heat exchanger unit 3. In the scroll 2, a rotation shaft 4 extends along a predetermined axis in a predetermined direction indicated by a reference symbol A3 (which is perpendicular to the sheet) and a centrifugal multi-blade fan 6 having a number of blades 5 is arranged around the rotation shaft 4. The scroll 2 has an air suction port 7 for sucking air by the help of the centrifugal multi-blade fan 6, an airflow path or channel 8 extending around the rotation shaft 4 in an involute shape, and an air discharge port 9 formed at an outermost end of the airflow path 8 and oriented in a tangential direction.

The heat exchanger unit 3 has an air inlet portion 11 communicating with the air discharge port 9, and a heat exchanger (for example, evaporator) 10. The air inlet portion 11 is greater in cross-sectional area than the air discharge port 9.

When the centrifugal multi-blade fan 6 is driven, the air is sucked through the air suction port 7 and is blown outward in a radial direction of the fan 6 to flow into the airflow path 8 of the involute shape. The air flowing into the airflow path 8 is discharged through the air discharge port 9 towards a first direction A1 perpendicular to the predetermined direction A3, i.e., in the tangential direction and flows through the air inlet portion 11 into the interior of the heat exchanger unit 3. During passage through the heat exchanger unit 3, the air is heat exchanged by the heat exchanger 10.

The air inlet portion 11 of the heat exchanger unit 3 is provided with a pair of diffusers 12 faced to each other in the predetermined direction A3. Each of the diffusers 12 is integrally formed with the heat exchanger unit 3 to be aligned with an extension of an inner surface of an outermost wall of the scroll 2. Each of the diffusers 12 protrudes in the air inlet portion 11 by a height n in a second direction A2 perpendicular to the first direction A1 and the predetermined direction A3. The height n is not greater than a half of a dimension m of the air discharge port 9 in the second direction A2. In the vehicle air conditioner 1 illustrated in the figure, m and n are equal to about 47mm and about 19mm, respectively.

Each of the diffusers 12 has a slant portion 13. These slant portions 13 are inclined so that a sectional area or a channel area of the air inlet portion 11 is gradually increased towards the heat exchanger 10, i.e., so that the slant portions 13 are gradually separated from each other towards the heat exchanger 10 in the first direction A1.

In the vehicle air conditioner 1 illustrated in Figs. 2 and 3, the air inlet portion 11 of the heat exchanger unit 3 is partially buried by the diffusers 12. Therefore, even if the airflow path 8 of the scroll 2 is shortened, a low-pressure high-speed air stream can be converted into a high-pressure low-speed air stream. Accordingly, the scroll 2 and thus the vehicle air conditioner 1 can be reduced in size without decreasing a blowing performance of the fan 6.

Since the diffusers 12 are integrally formed with the heat exchanger unit 3, it is possible to prevent a substantial increase in number of components.

It is possible to design the diffusers 12 having a size equivalent to the dimension of the air discharge port 9 in the second direction A2. However, as a result of study of the present inventors, it has been found out that, if the diffusers 12 have a size not greater than the half of the dimension of the air discharge port 9 in the second direction A2, a sufficient effect is obtained. In the latter case, it is also possible to remarkably improve the degree of freedom in design as compared with the case where the diffusers are formed throughout the above-mentioned dimension of the air discharge port 9 in the second direction A2.

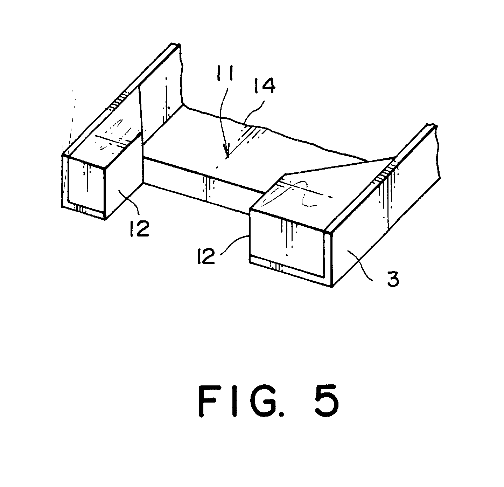

In Figs. 2 and 3, the diffusers 12 are integrally formed with the heat exchanger unit 3. Referring to Figs. 4 and 5, the air inlet portion 11 of the heat exchanger unit 3 is provided with a heat insulator 14 for preventing dew condensation. In this event, the diffusers 12 may be integrally formed with the heat insulator 14.

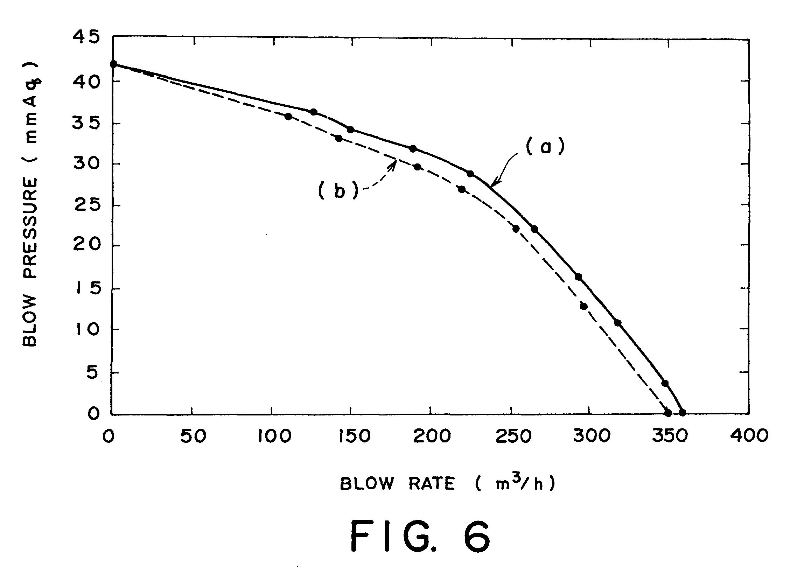

Referring to Fig. 6, the vehicle air conditioner illustrated in Figs. 2 and 3 has a blowing characteristic (a) while the conventional vehicle air conditioner illustrated in Fig. 1 has a blowing characteristic (b). In Fig. 6, an abscissa and an ordinate represent a blow rate (m³/h) and a blow pressure (mmAq), respectively. As is obvious from Fig. 6, the vehicle air conditioner illustrated in Figs. 2 and 3 can blow the air having a higher pressure as compared with the conventional vehicle air conditioner in Fig. 1 with respect to a same blow rate.

In the vehicle air conditioner according to this invention, the diffusers are buried or filled in at least a part of the air inlet portion of the heat exchanger unit greater in cross-sectional area than the opening of the air discharge port of the scroll. Therefore, it is possible to prevent the decrease in blowing performance and to achieve the reduction in size of the vehicle air conditioner. In addition, the degree of freedom in design can be improved.

## Claims

1. A vehicle air conditioner (1) comprising a scroll (2) defining an airflow path (8) which extends around a predetermined axis (A3) for guiding air and having an air discharge port (9) for discharging said air from said airflow path towards a first direction (A1) and a heat exchanger unit (3) having an air inlet portion (11) communicating with said air discharge port, said air inlet portion being greater in cross-sectional area than said air discharge port, a diffuser (12) buried in at least a part of said air inlet portion, **characterised by** said diffuser having a size (n) being equal to a half or less as compared with the size (m) of said air discharge port in a second direction (A2) perpendicular to said first direction(A1) and said axis (A3).

2. The vehicle air conditioner (1) according to claim 1, wherein said airflow path (8) forms an involute airflow with respect to said predetermined axis (A3).

3. The vehicle air conditioner (1) according to claim 2, wherein said diffuser (12) is placed at a position corresponding to an outer peripheral side of said air discharge port (9).

4. The vehicle air conditioner (1) according to any one of claims 1-3, wherein said diffuser (12) is formed integral with said heat exchanger unit (3).

5. The vehicle air conditioner (1) according to any of claim 1-3, wherein a heat insulator (14) is placed in said air inlet portion (11), said diffuser (12) being formed integral with said heat insulator.

## Patentansprüche

1. Fahrzeugklimaanlage (1) mit einem Spiralbauelement (2), das einen Luftstrompfad (8) definiert, der sich um eine vorbestimmte Achse (A3) erstreckt, zum Leiten von Luft und eine Luftausgabeöffnung (9) zum Ausgeben von Luft aus dem Luftstrompfad zu einer ersten Richtung (A1) und eine Wärmetauschereinheit (3) mit einem Lufteinlassabschnitt (11), der mit der Luftausgabeöffnung in Verbindung steht, aufweist, wobei der Lufteinlassabschnitt in der Querschnittsfläche größer als die Luftausgabeöffnung ist,
einem Diffusor (12), der in mindestens einem Teil des Lufteinlassabschnittes vergraben ist,
**dadurch gekennzeichnet, dass** der Diffusor eine Größe (n) gleich einer Hälfte oder weniger im Vergleich mit der Größe (m) der Luftausgabeöffnung in einer zweiten Richtung (A2) senkrecht zu der ersten Richtung (A1) und der Achse (A3) aufweist.

2. Fahrzeugklimaanlage (1) nach Anspruch 1, bei der der Luftstrompfad (8) einen involuten Luftstrom in Bezug auf die vorbestimmte Achse (A3) bildet.

3. Fahrzeugklimaanlage (1) nach Anspruch 2, bei der der Diffusor (12) an einer Position entsprechend einer äußere Umfangsseite der Luftausgabeöffnung (9) angeordnet ist.

4. Fahrzeugklimaanlage (1) nach einem der Ansprüche 1 bis 3, bei der der Diffusor (12) integral mit der Wärmetauschereinheit (3) gebildet ist.

5. Fahrzeugklimaanlage (1) nach einem der Ansprüche 1 bis 3, bei der ein Wärmeisolator (14) in dem Lufteinlassabschnitt (11) angeordnet ist, wobei der Diffusor (12) integral mit dem Wärmeisolator gebildet ist.

## Revendications

1. Climatiseur de véhicule (1) comprenant une spirale (2) définissant un chemin d'écoulement d'air (8) qui s'étend autour d'un axe prédéterminé (A3) pour guider l'air et comporte un port de décharge (9) pour décharger l'air du chemin d'écoulement d'air vers une première direction (A1), ainsi qu'un bloc d'échangeur de chaleur (3) comportant une partie d'entrée d'air (11) qui communique avec le port de décharge d'air, cette partie d'entrée d'air présentant une plus grande surface de section transversale que le port de décharge d'air, et comportant un diffuseur (12) noyé dans une partie au moins de la partie d'entrée d'air,
**caractérisé en ce que**
le diffuseur présente une taille (n) égale à la moitié au moins de la taille (m) du port de décharge d'air, dans une seconde direction (A2) perpendiculaire à la première direction (A1) et à l'axe (A3).

2. Climatiseur de véhicule (1) selon la revendication 1,
dans lequel
le chemin d'écoulement d'air (8) forme un écoulement d'air en développante autour de l'axe prédéterminé (A3).

3. Climatiseur de véhicule (1) selon la revendication 2,
dans lequel
le diffuseur (12) est placé dans une position correspondant à un côté périphérique extérieur du port de décharge d'air (9).

4. Climatiseur de véhicule (1) selon l'une quelconque des revendications 1 à 3,
dans lequel
le diffuseur (12) est formé d'une seule pièce avec le bloc d'échangeur de chaleur (3).

5. Climatiseur de véhicule (1) selon l'une quelconque des revendications 1 à 3,
dans lequel
un isolant thermique (14) est placé dans la partie d'entrée d'air (11), le diffuseur (12) étant formé d'une seule pièce avec cet isolant thermique.
